# EUROPEAN PATENT SPECIFICATION

(11) **EP 2 927 086 B1**
(45) Date of publication and mention of the grant of the patent: **12.02.2020**
(21) Application number: 14163240.6
(22) Date of filing: 02.04.2014
(51) Int. Cl.: B61C 3/00, B61C 7/04, B61D 1/00, B61D 3/10, B61F 1/06, B60T 1/10, B60L 7/10, B61H 9/06

(54) **An assembly set and method for equipping a railway traction vehicle with brake energy recovery using standardised traction modules**
Anordnung und Verfahren zur Ausrüstung eines Eisenbahntriebfahrzeugs mit Bremseenergierückgewinnung unter Verwendung standardisierter Traktionsmodule
Ensemble de montage et procédé pour équiper un véhicule de traction ferroviaire avec récupération de l'énergie de freinage au moyen de modules de traction normalisée

(43) Date of publication of application: 07.10.2015
(73) Proprietor: ALSTOM Transport Technologies, 93400 Saint-Ouen (FR)
(72) Inventor: Steindorff, Konrad, 38118 Braunschweig (DE)
(74) Representative: Lavoix

(56) References cited:
- EP-A1- 1 958 844
- WO-A1-2004/026657
- DE-A1-102008 047 988
- US-A1- 2008 083 576
- US-A1- 2008 190 318
- US-A1- 2010 282 122

## Description

The present invention relates to an assembly set for assembling an operational railway traction vehicle, said assembly set comprising:
- a non-operational railway traction vehicle including:
   - a first main traction bogie;
   - a main traction engine for delivering traction power to the first main traction bogie;
   - at least one second auxiliary traction bogie;
   - at least one auxiliary installation space for an auxiliary traction module for delivering traction power to the second auxiliary traction bogie; and
   - a vehicle traction controller for controlling the traction of the operational railway traction vehicle,
   wherein the auxiliary installation space has a power transmission interface for transmitting power between an auxiliary traction module installed in the auxiliary installation space and the second auxiliary traction bogie, and a traction control signal interface for functionally connecting an auxiliary traction module installed in the auxiliary installation space to the vehicle traction controller; and
- an auxiliary engine traction module comprising:
   - an auxiliary traction engine;
   - a traction power connector adapted for establishing a traction power connection between the auxiliary traction engine and said power transmission interface; and
   - a control signal connector for functionally connecting the auxiliary traction engine to the traction control signal interface.

Such an assembly set is known in the form of the applicant's Alstom Coradia Lint 54 two-car train set shown in the booklet entitled "Zukunft trifft Gegenwart", which can be downloaded at http://alstom.echonet.at/medialfile/39 ALSTOM Coradia LINT-Booklet.pdf. Page 8 of this booklet presents the applicant's two-car train set "Coradia LINT 54". This train set is equipped with three so-called "Diesel powerpacks". These powerpacks are traction modules equipped with a diesel engine. Each powerpack is fitted into an installation space next to its corresponding traction bogie. Powerpacks can be removed for maintenance or exchanged in case of malfunction. Hence, this known assembly set allows a flexible replacement of diesel power packs.

It would be desirable to reduce the fuel consumption of this known train set powertrain solution, especially during acceleration phases where fuel consumption is very high.

A solution could be to integrate a brake energy recovery device into the power train of the Coradia LINT 54, such as e.g. the one taught by DE 10 2008 047 988 A1. Indeed, during braking phases of this known train set, kinetic energy is transformed into thermal energy via dynamic and pneumatic brake systems. These brake systems provoke that transformed energy is irreversibly delivered to the ambient air and therefore lost. However, this would mean adding a regenerative brake to each powerpack and coupling the additional regenerative brake to the corresponding traction bogie by modifying the transmission between the powerpack's diesel engine and the traction bogie. In other words, this solution needs supplemental space next to each powerpack's diesel engine and a specific coupling unit. Since passenger train sets such as the Coradia LINT 54 are very space optimized, they have little space left. Therefore, this solution becomes very complicated and expensive, in particular in the case of retrofitting, and is not a viable option in practice.

US 2008/0083576 A1 teaches a separate energy storage wagon with a regenerative brake. During braking phases downhill the energy storage wagon recuperates brake energy which is available for acceleration phases uphill. The energy storage wagon can also be uncoupled from the freight train after a downhill route and coupled to another freight train driving an uphill route. This known solution is only adapted for freight trains and not for passenger trains. Indeed, adding of a supplemental energy recovery wagon to a passenger train is not desirable because of the increasing total length of the passenger train and the high costs of the supplemental architecture of the energy recovery wagon.

Accordingly, it is an object of the present invention to integrate brake energy recovery into a railway traction vehicle in a simple, economic, reliable and space saving manner.

This object is achieved with the above-mentioned assembly set by an auxiliary regenerative brake traction module comprising:
- a regenerative brake;
- a power connector adapted for establishing a power connection between the regenerative brake and said power transmission interface; and
- a control signal connector for functionally connecting the regenerative brake to the traction control signal interface,
said regenerative brake being adapted to store brake energy by braking the second auxiliary traction bogie and to deliver traction power to the second auxiliary traction bogie when the auxiliary regenerative brake traction module is installed in said auxiliary installation space.

By providing an auxiliary regenerative brake traction module, which could also be called a brake energy storage pack, with the same power and control signal connectors as the known diesel powerpacks, it becomes possible to replace a whole diesel powerpack by a regenerative brake. Accordingly, the regenerative brake has its own traction bogie and its own independent power train. In other words, the present invention provides a "plug & play" solution, which makes fitting or retrofitting of a regenerative brake to a railway traction vehicle very straightforward. There is no need to adapt a main traction bogie and a main traction engine of the railway traction vehicle. Equipping the railway traction vehicle with an auxiliary regenerative brake traction module having components compatible to be controlled via the existing functional interface of the railway traction vehicle avoids supplemental costs for the integration of additional communication lines. Moreover, the retrofitting by replacing the diesel powerpack with an energy storage pack is simplified. Further, the integration of the auxiliary regenerative brake traction module on board a railway traction vehicle has the advantage that the existing architecture of the railway traction vehicle can be used by the auxiliary regenerative brake traction module without supplemental costs for housing, chassis or other components. By having an auxiliary regenerative brake traction module capable to replace a diesel powerpack, no supplemental space on board a railway traction vehicle is needed. This simplifies refitting of existing railway traction vehicles. Locating the auxiliary regenerative brake traction module at a single location simplifies maintenance. Equipping a railway traction vehicle with an auxiliary regenerative brake traction module reduces the mean consumption of the diesel power packs of the railway traction vehicle.

The above object is also achieved by a method for modifying the traction system of a railway traction vehicle to recover brake energy, said railway traction vehicle comprising:
- a main traction unit with a first main traction bogie and a main traction engine for driving the first main traction bogie; and
- an auxiliary traction unit with a second auxiliary traction bogie and an auxiliary engine traction module, said auxiliary engine traction module:
   - being installed in a dedicated installation space of the railway traction vehicle;
   - having an auxiliary traction engine for driving the second auxiliary traction bogie; and
   - having a standardised interface for its power and control signal connection to the railway traction vehicle,
   the method comprising the step of replacing the auxiliary engine traction module by an auxiliary regenerative brake traction module comprising a regenerative brake and said standardised interface.

According to preferred embodiments, the inventive assembly set comprises one or more of the following features, taken in all technically possible combinations:
- the auxiliary installation space is located next to the second auxiliary traction bogie;
- the auxiliary installation space is located in the second auxiliary traction bogie;
- the auxiliary engine traction module or the auxiliary regenerative brake traction module is the second auxiliary traction bogie's only source of traction power;
- the first main traction bogie and the main traction engine are combined to a main traction unit and the second auxiliary traction bogie and the auxiliary engine traction module or the auxiliary regenerative brake traction module are combinable to an auxiliary traction unit, the main traction unit and the auxiliary traction unit each having a closed and self-contained power train;
- the regenerative brake of the auxiliary regenerative brake traction module is a hydraulic regenerative brake comprising a hydraulic accumulator for storing the energy recuperated from braking and a hydraulic pump/motor for conversion between hydraulic and kinetic energy;
- the regenerative brake of the auxiliary regenerative brake traction module is an electric traction system comprising an electric energy storage, such as batteries, ultra capacitors or flywheel based systems, for storing the energy recuperated from braking and an electrical machine for conversion between electric and kinetic energy;
- said power transmission interface includes a cardan shaft or an electric power transmission or a hydraulic power transmission;
- the main traction engine is part of a main traction module installed in a main installation space of the non-operational railway traction vehicle;
- said main traction module includes secondary generators adapted to be driven by the main traction engine in order to drive on-board equipment;
- the non-operational railway traction vehicle further comprises at least a third traction bogie coupled to a further traction engine forming part of a further traction module.

According to preferred embodiments, the inventive method comprises one or more of the following features:
- the regenerative brake of the auxiliary regenerative brake traction module is a hydraulic regenerative brake comprising a hydraulic accumulator for storing the energy recuperated from braking and a hydraulic pump/motor for conversion between hydraulic and kinetic energy;
- the regenerative brake of the auxiliary regenerative brake traction module is an electric regenerative brake comprising an electric energy storage for storing the energy recuperated from braking and an electrical machine for conversion between electric and kinetic energy.

The invention will now be described in detail with reference to the drawings, wherein:
Figure 1 shows an operational railway traction vehicle obtained with the assembly set of the present invention;
Figure 2 presents an inventive assembly set including a non-operational railway traction vehicle, an auxiliary engine traction module and an auxiliary regenerative brake traction module;
Figure 3 illustrates the auxiliary regenerative brake traction module of figure 2;
Figure 4 shows the auxiliary engine traction module of figure 2;
Figure 5 is a schematic view of the communication between the components of the functional interfaces of the railway traction vehicle of figure 1, equipped with an auxiliary engine traction module; and
Figure 6 is a schematic view of the communication between the components of the functional interfaces of the railway traction vehicle of figure 1, equipped with an auxiliary regenerative brake traction module.

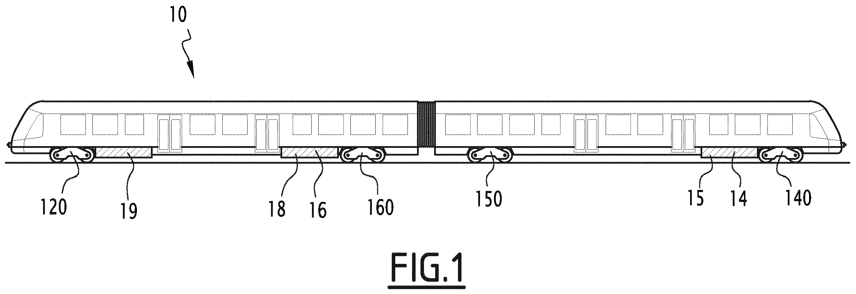

With reference to figure 1, there is shown an operational railway traction vehicle 10 having a first main traction bogie 120 mechanically coupled with a main traction module 19. The railway traction vehicle 10 further has one auxiliary traction bogie 160 mechanically coupled to an auxiliary traction module 18 and a third traction bogie 140 mechanically coupled to a further traction module 15 comprising a further traction engine 14. For reasons of simplicity, only the term engine is used hereinafter, which can be a combustion engine, an electric motor or other engine types. In addition, the traction vehicle 10 has a trailer bogie 150 having no mechanically coupling to any traction module. For maintenance reasons, the railway traction vehicle 10 can be placed in a depot where, for example, the diesel engines can be repaired or replaced. If during maintenance the auxiliary traction module 18 is removed an auxiliary installation space 16 is created.

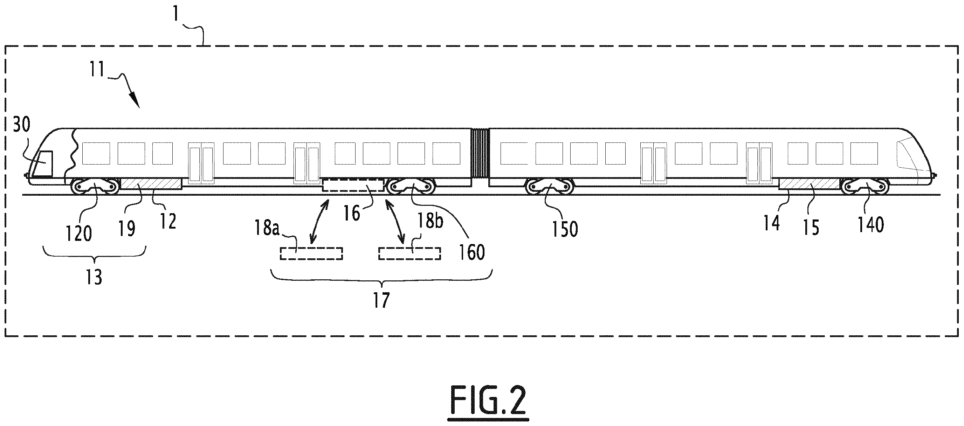

With reference to figure 2, there is shown an assembly set 1 for assembling the operational railway traction vehicle 10 of figure 1. The assembly set 1 includes a non-operational railway traction vehicle 11 equipped with a main traction unit 13. The main traction unit 13 comprises brakes (not shown), the main traction module 19 with a main traction engine 12, and the corresponding first main traction bogie 120. The main traction engine 12 is part of a main traction module 19 installed in a main installation space of the non-operational railway traction vehicle. The main traction unit 13 has a closed and self-contained powertrain. The main traction engine 12 delivers traction power to the first main traction bogie 120 and is the first main traction bogie's 120 only source of power. The main traction engine 12 is connected to a vehicle traction controller 30 by a traction control signal interface.

The assembly set 1 further comprises two auxiliary traction modules in the form of an auxiliary engine traction module 18a and an auxiliary regenerative brake traction module 18b.

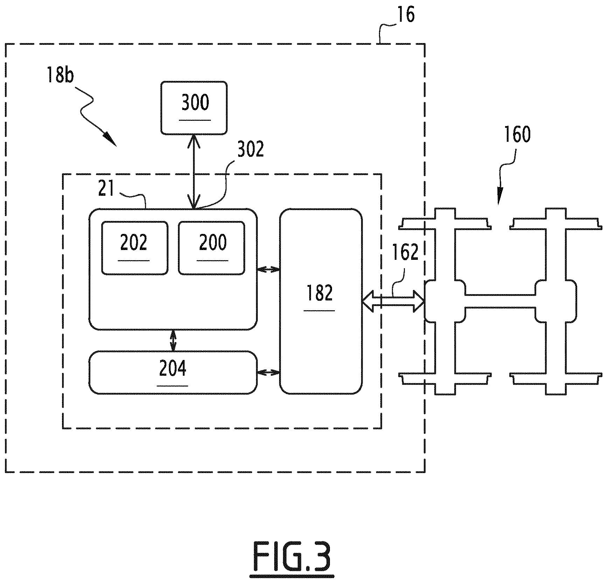

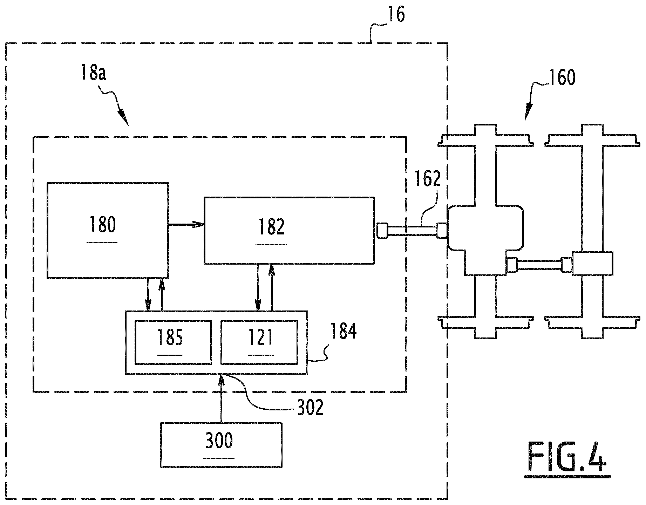

The non-operational railway traction vehicle 11 has the auxiliary installation space 16 providing space for integrating the auxiliary engine traction module 18a or the auxiliary regenerative brake traction module 18b. With reference to Fig. 3 and 4, the auxiliary installation space 16 has a power transmission interface 162, able to transmit traction power to the corresponding auxiliary traction bogie 160. Further, the auxiliary installation space 16 includes a traction control signal interface 300 to connect the auxiliary engine traction module 18a or the auxiliary regenerative brake traction module 18b to the vehicle traction controller 30 controlling the speed of the operational railway traction vehicle 10. The only source of traction power for the auxiliary traction power bogie 160 can be provided through the traction power transmission interface 162 by the auxiliary engine traction module 18a or the auxiliary regenerative brake traction module 18b.

The interaction of the auxiliary regenerative brake traction module 18b with the auxiliary traction bogie 160 is shown in greater detail in figure 3.

The auxiliary regenerative brake traction module 18b is mechanically coupled to the auxiliary traction bogie 160 by the power transmission interface 162 to receive power from the bogie 160 during breaking or to deliver traction power to the bogie 160. In the auxiliary regenerative brake traction module 18b, a power connector 182 is coupled to the power transmission interface 162 in order to establish a power connection between a regenerative brake 21 and the power interface 162. The traction direction is reversed by the axle reversing gear inside the bogie 160.

Further, the auxiliary regenerative brake traction module 18b comprises auxiliary components 204 interacting with the regenerative brake 21 and the power connector 182 for cooling and safeguarding of the module 18b. A traction control signal interface 300 is electrically connected to the regenerative brake 21, the auxiliary components 204 and to the power connector 182 in order to control those components and to receive status information from them.

The regenerative brake 21 includes an energy converter 200 converting mechanical energy received from the traction power connector 182 and storing energy in an energy storage unit 202. The energy stored in the energy storage unit 202 can be released to the energy converter 200 on a later moment in order to power the auxiliary traction bogie 160 by the power connector 182 and the power transmission interface 162. The auxiliary regenerative brake traction module 18b can be combined with the auxiliary traction bogie 160 to an auxiliary traction unit 17. The auxiliary traction unit 17 can also be formed by the combination of the auxiliary engine traction module 18a and the auxiliary traction bogie 160. The auxiliary traction unit 17 has a closed and self-contained powertrain.

Figure 4 shows a detailed view of the interaction of the auxiliary engine traction module 18a with the auxiliary traction bogie 160. The auxiliary traction bogie 160 is mechanically coupled by the traction power transmission interface 162 to the auxiliary engine traction module 18a to be powered by the auxiliary engine traction module 18a. The traction power connector 182 (e.g. a gearbox) allows establishing of a power connection between the auxiliary traction power delivery engine 180 (e.g. a diesel engine) and the traction power transmission interface 162 (e.g. a cardan shaft). Further, the auxiliary engine traction module 18a comprises additional components 184 such as a device for cooling of the auxiliary engine traction module 18a or e.g. secondary generators 185 for providing the operational railway traction vehicle 10 with electricity. The additional components 184 preferably also comprise dynamic brakes 121 (e.g retarder brake). A traction control signal interface 300 is connected to the additional components 184, the traction power connector 182 and the auxiliary traction power delivery engine 180 in order to control those components and to receive status information from them.

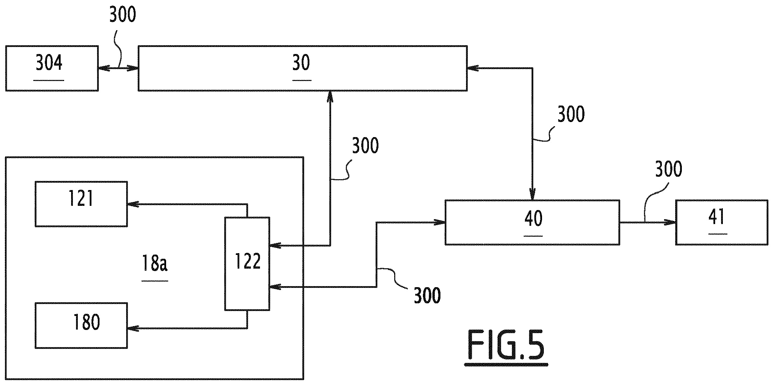

Figure 5 shows a functional interface allowing speed control of the operational railway traction vehicle 10 equipped with an auxiliary engine traction module 18a. The central element for speed control is a controller 30 which is connected by the traction control signal interface 300 via an engine traction module controller 122 to the dynamic brake 121 (e.g. a retarder brake) and to the auxiliary traction power delivery engine 180 of the auxiliary engine traction module 18a. The vehicle traction controller 30 is further connected by the interface 300 to a brake controller 40 and to a human machine interface 304. The brake controller 40 is connected by the control signal interface 300 to a friction brake 41 (e.g. a disc brake) and to the engine traction module controller 122 of the auxiliary engine traction module 18a for controlling the braking force distribution between the dynamic brakes 121 and the friction brake 41.

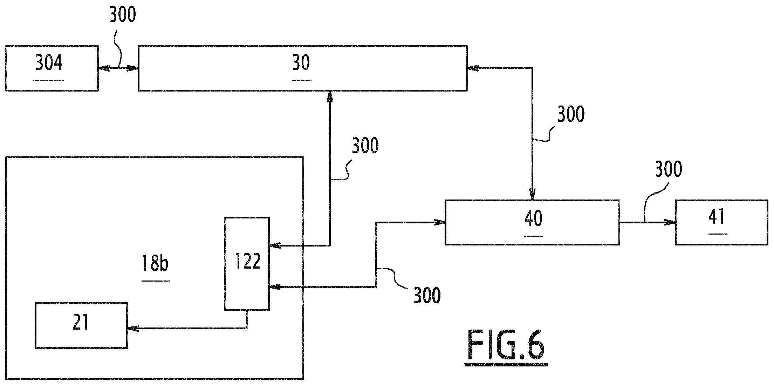

Figure 6 shows a functional interface allowing speed control of the operational railway traction vehicle 10 equipped with an auxiliary regenerative brake traction module 18b. The interconnections of the components are the same as for the auxiliary engine traction module 18a, except that the engine traction module controller 122 is not connected with an engine 180 or retarder brake 121, but with the regenerative brake 21. The controller 30 receives from the human machine interface 304 information about the desired nominal value of braking force and traction power entered by the train driver. The controller 30 communicates with the engine traction module controller 122 to set a nominal value for speed and traction or for a dynamic braking force. The controller 30 communicates with the brake controller 40 and the engine traction module controller 122 of the auxiliary traction unit 17 in order to obtain and share information about a measured actual braking force. The brake controller 40 compares the measured actual value of braking force with a desired value of braking force. Depending on the result of the comparison, the brake controller 40 regulates the regenerative brake 21 and the friction brake 41 in order to obtain the desired braking force value.

The brake controller 40 is equipped with a brake sensor allowing to measure if a wheel of the auxiliary traction bogie 160 is exposed to sliding or slippage. Sliding of the wheel of the auxiliary traction bogie 160 is controlled by the brake controller 40, and a signal is sent to the controller 30 and to the engine traction module controller 122. If a wheel of the auxiliary traction bogie 160 is exposed to slippage, the brake controller 40 communicates with the engine traction module controller 122 to change the traction power of the diesel engine 180 or the regenerative brake 21 in order to stop slippage. The brake controller 40 further informs the controller 30 about the slippage of the wheel of the auxiliary traction bogie 160.

Further, the controller 30 receives information about the actual traction power delivered by the traction units 13 and 17, the energy level of the energy storage unit 202, the state of the energy converter 200, the state of the traction power transmission interface 162, the state of the auxiliary components 204 and the additional components 184. Based on the received information, the controller 30 and the brake controller 40 control energy recuperation during the braking phase of the operational railway traction vehicle 10, as well as energy release from the energy storage unit 202 during the acceleration phase.

The controller 30 additionally provides to the human machine interface 304 all states of the controlled elements 202, 200, 204, 182 and all actual measured values and the actual energy level of the auxiliary regenerative brake traction module 18b. The controller 30 can communicate with every component and can control every component connected to the controller 30 individually and independently.

The energy recuperation with the auxiliary regenerative brake traction module 18b is especially effective for intermediate distances on regional transportation of the operational railway traction vehicle 10. This implicates having many rail-stations between which the railway traction vehicle 10 needs to accelerate and slow down. During a braking phase of the operational railway traction vehicle 10, the energy converter 200 is powered by the auxiliary traction bogie 160 through the power transmission interface 162 and the power connector 182. This allows the energy converter 200 to store energy in the energy storage unit 202. Once the energy storage unit 202 is filled, the power connector 182 uncouples the connection of the regenerative brake 21 with the auxiliary traction bogie 160. Once the railway traction vehicle 10 needs traction power during an acceleration phase, the energy converter 200 uses the stored energy in the energy storage unit 202 to power the auxiliary bogie 160 and the power connector 182 establishes coupling with the auxiliary traction bogie 160.

The operational railway traction vehicle 10 of figure 1, having a standardised interface in the installation space 16 for its power and control signal connection to an auxiliary traction module 18, interchangeably operate with the auxiliary regenerative brake traction module 18b comprising the regenerative brake 21 or a diesel power pack 18a.

The dismounting of an auxiliary traction module 18 provides the auxiliary installation space 16 next to the auxiliary traction bogie 160. Further, this dismounting provides access to the traction power transmission interface 162 of the auxiliary traction bogie 160 and the traction control signal interface 300.

The auxiliary regenerative brake traction module 18b can be installed in the auxiliary installation space 16. Thereby, the traction power connector 182 is mechanically connected to the traction power transmission interface 162 and the auxiliary regenerative brake traction module 18b is also functionally connected to the traction control signal interface 300.

The auxiliary installation space 16 which is provided by removing the auxiliary traction module 18 of the operational railway traction vehicle 10 can be located next to the traction bogie 160 (as shown in figure 2), or alternatively in the traction bogie 160 (not shown). In the case of a diesel-engine driven railway traction vehicle, the location of the auxiliary traction module 18 is generally next to the traction bogie 160. In the case of an electric-motor driven railway traction vehicle, the location of the auxiliary traction module 18 is generally in the traction bogie 160.

The afore-mentioned non-operational or operational railway traction vehicle 10, 11 can further comprise the third traction bogie 140 coupled to the further traction engine 14 included in the further traction module 15. The further traction module 15 can have the same architecture and standardised interface as the auxiliary engine traction module 18a, the auxiliary regenerative brake traction module 18b and the main traction module 19.

The railway traction vehicle 10, 11 can further comprise the trailer bogie 150 to support the railway traction vehicle 10, 11. The trailer bogie 150 can be located between the auxiliary traction bogie 160 and third traction bogie 140. The trailer bogie 150 and the third traction bogie 140 can also be equipped with brake systems.

The main traction unit 13 can include secondary generators adapted to be driven by the main traction engine 12 in order to power on-board equipment. The main traction engine 12 is part of the main traction unit 13.

In one specific embodiment, the auxiliary regenerative brake traction module 18b includes a hydraulic regenerative brake 21. The hydraulic regenerative brake 21 comprises a hydraulic pump and motor 200 for conversion between kinetic energy and potential energy which is stored in a hydraulic accumulator 202 in form of hydraulic pressure. The energy recuperated and stored from braking can be released on demand. During the braking phase of the operational railway traction vehicle 10, the energy converter 200 acts as a hydraulic pump and pumps a liquid into the hydraulic accumulator 202 until this latter is filled. During the acceleration phase of the railway traction vehicle 10, the energy converter 200 acts as a hydraulic motor which powers the auxiliary traction bogie 160. The hydraulic motor 200 is driven by the pressurised fluid in the hydraulic accumulator 202 flowing there through. In this case, the auxiliary components 204 comprise a safety valve to evacuate overpressure from the hydraulic accumulator 202. The hydraulic pump 200 is disconnected by the power connector 182 from the auxiliary traction bogie 160 if the hydraulic accumulator 202 has reached a predefined level of pressure energy.

The efficiency ratio of transforming kinetic energy into potential energy by a hydrostatic principle for storage of hydraulic pressure energy in the hydrostatic accumulator 202 is about 80%. The efficiency ratio of transforming potential energy into kinetic energy by the hydrostatic principle for driving a hydraulic motor 200 by the pressurised fluid stored in the hydraulic accumulator 202 is also about 80%. This allows a cheap and effective storage of brake energy.

In another embodiment, the energy converter 200 can be an electrical motor/generator and the energy storage unit 202 can be a battery or electrical ultra capacitors, or flywheel based systems. The energy recuperation and release is analogous to the above-described hydraulic regenerative brake.

In a different embodiment, the energy converter 200 can be an infinitely variable transmission and the energy storage unit 202 can be a flywheel.

In a specific embodiment, the transmission interface 162 includes a cardan shaft or electric power transmission or hydraulic power transmission.

In one particular embodiment, the first main traction bogie 120, the auxiliary traction bogie 160 and the third traction bogie 140 comprise an axle reversing gearbox for changing traction direction of the operational railway traction vehicle 10. The axle reversing gearbox of the bogie 120, 140 and 160 is connected by a cardan shaft to the power connector 182, which can be a clutch.

In an alternative embodiment, the railway traction vehicle 10, 11 is equipped with multiple interconnected energy storage units 202 split up in several small spaces distributed over the railway traction vehicle 10, 11. During a long braking phase of the operational railway traction vehicle 10 the brake energy is transformed and stored in an energy storage unit 202. Once the desired energy storage level of the first energy storage unit is reached, another connected energy storage unit 202 is provided with the transformed brake energy, until all energy storage units 202 are filled. This allows effective energy recovery even for long braking phases.

In an alternative embodiment, the energy converter 200 could be located in the bogie 160. In the case of the bogie 160 containing the energy converter 200, the energy storage unit 202 can be located in the auxiliary installation space 16.

Another specific embodiment of the railway traction vehicle 10, 11 allows prioritization of the regenerative brake 21 during a braking phase by the use of a specific program on the brake controller 40. This program can be implemented as firmware on the brake controller 40 which is why in the following only the brake controller 40 is mentioned.

During a braking phase the brake controller 40 triggers first the regenerative brake 21 independently from other brake systems on the operational railway traction vehicle 10 equipped with the auxiliary regenerative brake traction module 18b. Then the brake controller 40 compares a desired braking force received by the human machine interface 304 via the controller 40 with the actual braking force of the railway traction vehicle 11 performed by the regenerative brake 21. If the desired value of braking force is higher than the actual braking force, the brake controller 40 triggers supplemental braking systems, like the dynamic brake 121 or the friction brakes 41 in order to obtain the desired braking force.

This prioritization of the regenerative brake 21 allows recuperating a maximum of braking energy during braking phases in the energy storage unit 202 of the regenerative brake 21. Prioritization of the regenerative brake 21 is especially interesting for long braking phases where a low braking force is acceptable.

The controller 30 can be a programmable logic control. The traction control signal interface 300 can be an interface designed for a CAN bus communication like the CANopen protocol.

Alternatively, the traction control signal interface 300 can be a wireless communication system on-board the operational railway traction vehicle 10.

### List of reference numbers

- 1: assembly set
- 10: operational railway traction vehicle
- 11: non-operational railway traction vehicle
- 12: main traction engine
- 13: main traction unit
- 14: further traction engine
- 15: further traction module
- 16: auxiliary installation space
- 17: auxiliary traction unit
- 18: auxiliary traction module
- 18a: auxiliary engine traction module
- 18b: auxiliary regenerative brake traction module
- 19: main traction module
- 21: regenerative brake
- 30: vehicle traction controller
- 40: brake controller
- 41: friction brakes (e.g. disk brakes)
- 120: first main traction bogie
- 121: dynamic brakes (e.g. retarder brakes)
- 122: engine traction module controller
- 140: third traction bogie
- 150: trailer bogie
- 160: auxiliary traction bogie
- 162: power transmission interface (e.g. cardan shaft)
- 180: auxiliary traction power delivery engine
- 182: traction power connector (e.g. clutch, gear box)
- 184: additional components (e.g. cooling, brake)
- 185: secondary generators
- 200: energy converter (e. g. hydraulic pump/motor)
- 202: energy storage unit (e.g. hydraulic accumulator)
- 204: auxiliary components (e.g. cooling means)
- 300: traction control signal interface (bus system by cable // wireless)
- 302: control signal connector
- 304: human machine interface

## Claims

1. An assembly set (1) for assembling an operational railway traction vehicle (10), said assembly set comprising:
- a non-operational railway traction vehicle (11) including:
• a first main traction bogie (120);
• a main traction engine (12) for delivering traction power to the first main traction bogie (120);
• at least one second auxiliary traction bogie (160);
• at least one auxiliary installation space (16) for an auxiliary traction module (18a, 18b) for delivering traction power to the second auxiliary traction bogie (160); and
• a vehicle traction controller (30) for controlling the traction of the operational railway traction vehicle (10),
wherein the auxiliary installation space (16) has a power transmission interface (162) for transmitting power between an auxiliary traction module (18a, 18b) installed in the auxiliary installation space (16) and the second auxiliary traction bogie (160), and a traction control signal interface (300) for functionally connecting an auxiliary traction module (18a, 18b) installed in the auxiliary installation space (16) to the vehicle traction controller (30); and
- an auxiliary engine traction module (18a) comprising:
• an auxiliary traction engine (180);
• a traction power connector (182) adapted for establishing a traction power connection between the auxiliary traction engine (180) and said power transmission interface (162); and
• a control signal connector (302) for functionally connecting the auxiliary traction engine (180) to the traction control signal interface (300);
**characterised by** an auxiliary regenerative brake traction module (18b) comprising:
• a regenerative brake (21);
• a power connector (182) adapted for establishing a power connection between the regenerative brake (21) and said power transmission interface (162); and
• a control signal connector (302) for functionally connecting the regenerative brake (21) to the traction control signal interface (300),
said regenerative brake (21) being adapted to store brake energy by braking the second auxiliary traction bogie (160) and to deliver traction power to the second auxiliary traction bogie (160) when the auxiliary regenerative brake traction module (18b) is installed in said auxiliary installation space (16).

2. The assembly set of claim 1, wherein the auxiliary installation space (16) is located next to the second auxiliary traction bogie (160).

3. The assembly set of claim 1, wherein the auxiliary installation space (16) is located in the second auxiliary traction bogie (160).

4. The assembly set of any one of the previous claims, wherein the auxiliary engine traction module (18a) or the auxiliary regenerative brake traction module (18b) is the second auxiliary traction bogie's (160) only source of traction power.

5. The assembly set of any one of the previous claims, wherein the first main traction bogie (120) and the main traction engine (12) are combined to a main traction unit (13) and the second auxiliary traction bogie (160) and the auxiliary engine traction module (18a) or the auxiliary regenerative brake traction module (18b) are combinable to an auxiliary traction unit (17), the main traction unit (13) and the auxiliary traction unit (17) each having a closed and self-contained powertrain.

6. The assembly set of any one of the previous claims, wherein the regenerative brake (21) of the auxiliary regenerative brake traction module (18b) is a hydraulic regenerative brake comprising a hydraulic accumulator (202) for storing the energy recuperated from braking and a hydraulic pump/motor (200) for conversion between hydraulic and kinetic energy.

7. The assembly set of any one of claims 1 to 5, wherein the regenerative brake (21) of the auxiliary regenerative brake traction module (18b) is an electric traction system comprising an electric energy storage, such as batteries, ultra capacitors or flywheel based systems, for storing the energy recuperated from braking and an electrical machine for conversion between electric and kinetic energy.

8. The assembly set of any one of the previous claims, wherein said power transmission interface (162) includes a cardan shaft or an electric power transmission or a hydraulic power transmission.

9. The assembly set of any one of the previous claims, wherein the main traction engine (12) is part of a main traction module (19) installed in a main installation space of the non-operational railway traction vehicle.

10. The assembly set of claim 9, wherein said main traction module (19) includes secondary generators (185) adapted to be driven by the main traction engine (12) in order to drive on-board equipment.

11. The assembly set of any one of the previous claims, wherein the non-operational railway traction vehicle (11) further comprises at least a third traction bogie (140) coupled to a further traction engine (14) forming part of a further traction module (15).

12. A method for modifying the traction system of a railway traction vehicle (10) to recover brake energy, said railway traction vehicle comprising:
- a main traction unit (13) with a first main traction bogie (120) and a main traction engine (12) for driving the first main traction bogie (120); and
- an auxiliary traction unit (17) with a second auxiliary traction bogie (160) and an auxiliary engine traction module (18a), said auxiliary engine traction module (18a):
• being installed in a dedicated installation space (16) of the railway traction vehicle (11);
• having an auxiliary traction engine (180) for driving the second auxiliary traction bogie (160); and
• having a standardised interface for its power and control signal connection to the railway traction vehicle (11),
the method comprising the step of replacing the auxiliary engine traction module (18a) by an auxiliary regenerative brake traction module (18b) comprising a regenerative brake (21) and said standardised interface.

13. The method of claim 12, wherein the regenerative brake (21) of the auxiliary regenerative brake traction module (18b) is a hydraulic regenerative brake comprising a hydraulic accumulator (202) for storing the energy recuperated from braking and a hydraulic pump/motor (200) for conversion between hydraulic and kinetic energy.

14. The method of claim 12, wherein the regenerative brake (21) of the auxiliary regenerative brake traction module (18b) is an electric regenerative brake comprising an electric energy storage for storing the energy recuperated from braking and an electrical machine for conversion between electric and kinetic energy.

## Patentansprüche

1. Montagesatz (1) zum Montieren eines operativen Eisenbahn-Triebfahrzeugs (10), wobei der Montagesatz Folgendes umfasst:
- ein nicht-operatives Eisenbahn-Triebfahrzeug (11), das Folgendes beinhaltet:
• ein erstes, hauptsächliches Triebfahrwerk (120),
• einen Haupttriebmotor (12), um dem ersten, hauptsächlichen Triebfahrwerk (120) Triebenergie zuzuführen,
• mindestens ein zweites, hilfsweises Triebfahrwerk (160),
• mindestens ein Hilfsinstallationsraum (16) für ein Hilfstriebmodul (18a, 18b), um dem zweiten, hilfsweisen Triebfahrwerk (160) Triebenergie zuzuführen, und
• eine Fahrzeugtriebsteuerung (30) zum Steuern der Triebkraft des operativen Eisenbahn-Triebfahrzeugs (10),
wobei der Hilfsinstallationsraum (16) eine Energieübertragungs-Schnittstelle (162) zum Übertragen von Energie zwischen einem Hilfstriebmodul (18a, 18b), das in den Hilfsinstallationsraum (16) installiert ist, und dem zweiten, hilfsweisen Triebfahrwerk (160) und eine Triebsteuersignal-Schnittstelle (300) zum funktionalen Verbinden eines Hilfstriebmoduls (18a, 18b), das in den Hilfsinstallationsraum (16) installiert ist, mit der Fahrzeugtriebsteuerung (30) aufweist, und
- ein Hilfsmotor-Triebmodul (18a), das Folgendes umfasst:
• einen Hilfstriebmotor (180),
• ein Triebenergie-Verbindungsstück (182), das zum Einrichten einer Triebenergieverbindung zwischen dem Hilfstriebmotor (180) und der Energieübertragungs-Schnittstelle (162) eingerichtet ist, und
• ein Steuersignal-Verbindungsstück (302) zum funktionalen Verbinden des Hilfstriebmotors (180) mit der Triebsteuersignal-Schnittstelle (300),
**gekennzeichnet durch** ein Hilfsnutzbremsen-Triebmodul (18b), das Folgendes umfasst:
• eine Nutzbremse (21),
• ein Energieverbindungsstück (182), das zum Einrichten einer Energieverbindung zwischen der Nutzbremse (21) und der Energieübertragungs-Schnittstelle (162) eingerichtet ist, und
• ein Steuersignal-Verbindungsstück (302) zum funktionalen Verbinden der Nutzbremse (21) mit der Triebsteuersignal-Schnittstelle (300),
wobei die Nutzbremse (21) dafür eingerichtet ist, durch Bremsen des zweiten, hilfsweisen Triebfahrwerks (160) Bremsenergie zu speichern und dem zweiten, hilfsweisen Triebfahrwerk (160) Triebenergie zuzuführen, wenn das Hilfsnutzbremsen-Triebmodul (18b) in den Hilfsinstallationsraum (16) installiert ist.

2. Montagesatz nach Anspruch 1, wobei sich der Hilfsinstallationsraum (16) nächst dem zweiten, hilfsweisen Triebfahrwerk (160) befindet.

3. Montagesatz nach Anspruch 1, wobei sich der Hilfsinstallationsraum (16) in dem zweiten, hilfsweisen Triebfahrwerk (160) befindet.

4. Montagesatz nach einem der vorhergehenden Ansprüche, wobei das Hilfsmotor-Triebmodul (18a) oder das Hilfsnutzbremsen-Triebmodul (18b) die einzige Triebenergiequelle für das zweite, hilfsweise Triebfahrwerk (160) ist.

5. Montagesatz nach einem der vorhergehenden Ansprüche, wobei das erste, hauptsächliche Triebfahrwerk (120) und der Haupttriebmotor (12) zu einer Haupttriebeinheit (13) kombiniert sind und das zweite, hilfsweise Triebfahrwerk (160) und das Hilfsmotor-Triebmodul (18a) oder das Hilfsnutzbremsen-Triebmodul (18b) zu einer Hilfstriebeinheit (17) kombiniert sind, wobei die Haupttriebeinheit (13) und die Hilfstriebeinheit (17) jeweils einen geschlossenen und eigenständigen Antriebsstrang aufweisen.

6. Montagesatz nach einem der vorhergehenden Ansprüche, wobei die Nutzbremse (21) des Hilfsnutzbremsen-Triebmoduls (18b) eine hydraulische Nutzbremse ist, die einen Hydraulikspeicher (202) zum Speichern der Energie, die aus dem Bremsen zurückgewonnen wird, und eine Hydraulikpumpe / einen Hydraulikmotor (200) zur Umwandlung zwischen hydraulischer und kinetischer Energie umfasst.

7. Montagesatz nach einem der Ansprüche 1 bis 5, wobei die Nutzbremse (21) des Hilfsnutzbremsen-Triebmoduls (18b) ein elektrisches Triebsystem ist, das einen Elektroenergiespeicher, wie beispielsweise Batterien, Ultrakondensatoren oder Systeme auf Schwungradbasis umfasst, um die Energie zu speichern, die aus dem Bremsen zurückgewonnen wird, und eine elektrische Maschine zur Umwandlung zwischen elektrischer und kinetischer Energie.

8. Montagesatz nach einem der vorhergehenden Ansprüche, wobei die Energieübertragungs-Schnittstelle (162) eine Kardanwelle oder eine Elektroenergieübertragung oder eine Hydraulikenergieübertragung beinhaltet.

9. Montagesatz nach einem der vorhergehenden Ansprüche, wobei die Haupttriebmaschine (12) Teil eines Haupttriebmoduls (19) ist, das in einen Hauptinstallationsraum des nicht-operativen Eisenbahn-Triebfahrzeugs installiert ist.

10. Montagesatz nach Anspruch 9, wobei das Haupttriebmodul (19) sekundäre Generatoren (185) beinhaltet, die dafür eingerichtet sind, durch den Haupttriebmotor (12) angetrieben zu werden, um an Bord befindliche Ausrüstung anzutreiben.

11. Montagesatz nach einem der vorhergehenden Ansprüche, wobei das nichtoperative Eisenbahn-Triebfahrzeug (11) ferner mindestens ein drittes Triebfahrwerk (140) umfasst, das an einen weiteren Triebmotor (14) gekoppelt ist, welcher einen Teil eines weiteren Triebmoduls (15) bildet.

12. Verfahren zum Modifizieren des Triebsystems eines Eisenbahn-Triebfahrzeugs (10), um Bremsenergie zurückzugewinnen, wobei das Eisenbahn-Triebfahrzeug Folgendes umfasst:
- eine Haupttriebeinheit (13) mit einem ersten, hauptsächlichen Triebfahrwerk (120) und einem Haupttriebmotor (12), um das erste, hauptsächliche Triebfahrwerk (120) anzutreiben, und
- eine Hilfstriebeinheit (17) mit einem zweiten, hilfsweisen Triebfahrwerk (160) und einem Hilfsmotor-Triebmodul (18a), wobei das Hilfsmotor-Triebmodul (18a):
• in einen zugewiesenen Installationsraum (16) des Eisenbahn-Triebfahrzeugs (11) installiert ist,
• einen Hilfstriebmotor (180) zum Antreiben des zweiten, hilfsweisen Triebfahrwerks (160) aufweist und
• eine standardisierte Schnittstelle für seine Energie- und Steuersignalverbindung zu dem Eisenbahn-Triebfahrzeug (11) aufweist,
wobei das Verfahren den Schritt des Ersetzens des Hilfsmotor-Triebmoduls (18a) durch ein Hilfsnutzbremsen-Triebmodul (18b) umfasst, welches eine Nutzbremse (21) und die standardisierte Schnittstelle umfasst.

13. Verfahren nach Anspruch 12, wobei die Nutzbremse (21) des Hilfsnutzbremsen-Triebmoduls (18b) eine hydraulische Nutzbremse ist, die einen Hydraulikspeicher (202) zum Speichern der Energie, die aus dem Bremsen zurückgewonnen wird, und eine Hydraulikpumpe / einen Hydraulikmotor (200) zur Umwandlung zwischen hydraulischer und kinetischer Energie umfasst.

14. Verfahren nach Anspruch 12, wobei die Nutzbremse (21) des Hilfsnutzbremsen-Triebmoduls (18b) eine elektrische Nutzbremse ist, die einen Elektroenergiespeicher zum Speichern der Energie, die aus dem Bremsen zurückgewonnen wird, und eine elektrische Maschine zur Umwandlung zwischen elektrischer und kinetischer Energie umfasst.

## Revendications

1. Ensemble de montage (1) pour monter un véhicule de traction ferroviaire opérationnel (10), dans lequel ledit ensemble de montage comprend :
- un véhicule de traction ferroviaire non opérationnel (11) incluant :
• un premier bogie de traction principal (120) ;
• un moteur de traction principal (12) destiné à fournir une puissance de traction au premier bogie de traction principal (120) ;
• au moins un deuxième bogie de traction auxiliaire (160) ;
• au moins un espace d'installation auxiliaire (16) pour un module de traction auxiliaire (18a, 18b) destiné à fournir une puissance de traction au deuxième bogie de traction auxiliaire (160) ; et
• un contrôleur de traction de véhicule (30) destiné à commander la traction du véhicule de traction ferroviaire opérationnel (10) ;
dans lequel l'espace d'installation auxiliaire (16) présente une interface de transmission de puissance (162) destinée à transmettre de la puissance entre un module de traction auxiliaire (18a, 18b) installé dans l'espace d'installation auxiliaire (16) et le deuxième bogie de traction auxiliaire (160), et une interface de signal de commande de traction (300) destinée à connecter fonctionnellement un module de traction auxiliaire (18a, 18b) installé dans l'espace d'installation auxiliaire (16) au contrôleur de traction de véhicule (30) ; et
- un module de traction de moteur auxiliaire (18a) comprenant :
• un moteur de traction auxiliaire (180) ;
• un connecteur de puissance de traction (182) apte à établir une connexion de puissance de traction entre le moteur de traction auxiliaire (180) et ladite interface de transmission de puissance (162) ; et
• un connecteur de signal de commande (302) destiné à connecter fonctionnellement le moteur de traction auxiliaire (180) à l'interface de signal de commande de traction (300) ;
**caractérisé par** un module de traction de frein à récupération auxiliaire (18b) comprenant :
• un frein à récupération (21) ;
• un connecteur de puissance (182) apte à établir une connexion de puissance entre le frein à récupération (21) et ladite interface de transmission de puissance (162) ; et
• un connecteur de signal de commande (302) destiné à connecter fonctionnellement le frein à récupération (21) à l'interface de signal de commande de traction (300) ;
ledit frein à récupération (21) étant apte à stocker de l'énergie de freinage en freinant le deuxième bogie de traction auxiliaire (160) et à fournir une puissance de traction au deuxième bogie de traction auxiliaire (160) lorsque le module de traction de frein à récupération auxiliaire (18b) est installé dans ledit espace d'installation auxiliaire (16).

2. Ensemble de montage selon la revendication 1, dans lequel l'espace d'installation auxiliaire (16) est situé à côté du deuxième bogie de traction auxiliaire (160).

3. Ensemble de montage selon la revendication 1, dans lequel l'espace d'installation auxiliaire (16) est situé dans le deuxième bogie de traction auxiliaire (160).

4. Ensemble de montage selon l'une quelconque des revendications précédentes, dans lequel le module de traction de moteur auxiliaire (18a) ou le module de traction de frein à récupération auxiliaire (18b) correspond à l'unique source de puissance de traction du deuxième bogie de traction auxiliaire (160).

5. Ensemble de montage selon l'une quelconque des revendications précédentes, dans lequel le premier bogie de traction principal (120) et le moteur de traction principal (12) sont combinés à une unité de traction principale (13), et le deuxième bogie de traction auxiliaire (160) et le module de traction de moteur auxiliaire (18a) ou le module de traction de frein à récupération auxiliaire (18b) peuvent être combinés en une unité de traction auxiliaire (17), l'unité de traction principale (13) et l'unité de traction auxiliaire (17) présentant chacune un groupe motopropulseur fermé et autonome.

6. Ensemble de montage selon l'une quelconque des revendications précédentes, dans lequel le frein à récupération (21) du module de traction de frein à récupération auxiliaire (18b) est un frein à récupération hydraulique comprenant un accumulateur hydraulique (202) pour stocker l'énergie récupérée à partir du freinage, et une pompe/moteur hydraulique (200) pour une conversion entre énergie hydraulique et énergie cinétique.

7. Ensemble de montage selon l'une quelconque des revendications 1 à 5, dans lequel le frein à récupération (21) du module de traction de frein à récupération auxiliaire (18b) est un système de traction électrique comprenant un accumulateur d'énergie électrique, tel que des batteries, des ultra-condensateurs ou des systèmes à volant d'inertie, pour stocker l'énergie récupérée à partir du freinage, et une machine électrique pour la conversion entre énergie électrique et énergie cinétique.

8. Ensemble de montage selon l'une quelconque des revendications précédentes, dans lequel ladite interface de transmission de puissance (162) inclut un arbre à cardan ou une transmission de puissance électrique ou une transmission de puissance hydraulique.

9. Ensemble de montage selon l'une quelconque des revendications précédentes, dans lequel le moteur de traction principal (12) fait partie d'un module de traction principal (19) installé dans un espace d'installation principal du véhicule de traction ferroviaire non opérationnel.

10. Ensemble de montage selon la revendication 9, dans lequel ledit module de traction principal (19) inclut des générateurs secondaires (185) aptes à être entraînés par le moteur de traction principal (12) afin d'entraîner un équipement embarqué.

11. Ensemble de montage selon l'une quelconque des revendications précédentes, dans lequel le véhicule de traction ferroviaire non opérationnel (11) comprend en outre au moins un troisième bogie de traction (140) couplé à un moteur de traction supplémentaire (14) faisant partie d'un module de traction supplémentaire (15).

12. Procédé de modification du système de traction d'un véhicule de traction ferroviaire (10) en vue de récupérer de l'énergie de freinage, ledit véhicule de traction ferroviaire comprenant :
- une unité de traction principale (13) avec un premier bogie de traction principal (120) et un moteur de traction principal (12) pour entraîner le premier bogie de traction principal (120) ; et
- une unité de traction auxiliaire (17) avec un deuxième bogie de traction auxiliaire (160) et un module de traction de moteur auxiliaire (18a), ledit module de traction de moteur auxiliaire (18a) :
• étant installé dans un espace d'installation dédié (16) du véhicule de traction ferroviaire (11) ;
• présentant un moteur de traction auxiliaire (180) destiné à entraîner le deuxième bogie de traction auxiliaire (160) ; et
• présentant une interface normalisée pour sa connexion de signal de commande et de puissance au véhicule de traction ferroviaire (11) ;
le procédé comprenant l'étape consistant à remplacer le module de traction de moteur auxiliaire (18a) par un module de traction de frein à récupération auxiliaire (18b) comprenant un frein à récupération (21) et ladite interface normalisée.

13. Procédé selon la revendication 12, dans lequel le frein à récupération (21) du module de traction de frein à récupération auxiliaire (18b) est un frein à récupération hydraulique comprenant un accumulateur hydraulique (202) pour stocker l'énergie récupérée à partir du freinage, et une pompe/moteur hydraulique (200) pour la conversion entre énergie hydraulique et énergie cinétique.

14. Procédé selon la revendication 12, dans lequel le frein à récupération (21) du module de traction de frein à récupération auxiliaire (18b) est un frein à récupération électrique comprenant un accumulateur d'énergie électrique pour stocker l'énergie récupérée à partir du freinage, et une machine électrique pour la conversion entre énergie électrique et énergie cinétique.
